# EUROPEAN PATENT APPLICATION

(11) **EP 3 163 429 A1**
(43) Date of publication of application: **03.05.2017**
(21) Application number: 16196054.7
(22) Date of filing: 27.10.2016
(51) Int. Cl.: G06F 3/0488

(54) **ELECTRONIC DEVICE AND METHOD FOR PROVIDING USER INTERACTION BASED ON FORCE TOUCH**

(30) Priority: 29.10.2015 KR 20150150972
(71) Applicant: Samsung Electronics Co., Ltd., Gyeonggi-do 16677 (KR)
(72) Inventor: Lee, Saerom, 16677 Suwon-si (KR); Park, Seongwoong, 16677 Suwon-si (KR); Kang, Byungjin, 16677 Suwon-si (KR); Kim, Namhoi, 16677 Suwon-si (KR); Lee, Dohyung, 16677 Suwon-si (KR)
(74) Representative: Nederlandsch Octrooibureau

(57) **Abstract**

An electronic device and method provide a user interaction based on a force touch. The electronic device may include a plurality of hardware modules, a touch screen, and a controller. The touch screen may detect a force touch having a force greater than a predetermined value. When the force touch is detected, the controller may identify at least one running hardware module among the plurality ofhardware modules. Then the controller may perform a particular function mapped to the identified at least one hardware module and the detected force touch.

## Description

### TECHNICAL FIELD

Various embodiments of the present disclosure relate to an electronic device and method for providing a user interaction based on a force touch.

### BACKGROUND

Today a great variety of electronic devices, such as a smart phone, a tablet personal computer (PC), a notebook, and the like, are widely used due to their convenience and portability. In particular, electronic devices having a touch screen are increasingly popularized in these days.

The touch screen supports a more intuitive control of various functions through a touch-based or touch-sensitive input. Namely, the electronic device having the touch screen can be easily manipulated using a user interface (UI) screen. For example, such an electronic device may be controlled or receive information through various kinds of inputs, such as a tap, a long touch, a drag, a flick, a double touch, a multi-touch, or a gesture, on the touch screen.

Recent electronic devices can offer numerous and complicated functions to users, and thus there is a growing interest in a new user interaction for easily controlling such functions. One of such interests is about technique to detect a touch force through the touch screen and then offer various user interactions based on the detected touch force.

### SUMMARY

To address the above-discussed deficiencies, it is a primary object to provide different functions or operations depending on types of a hardware module which is running when a force touch is detected.

According to an embodiment of the present disclosure, an electronic device may include a plurality of hardware modules, a touch screen configured to detect a force touch having a force greater than a predetermined value, and a controller configured to identify, when the force touch is detected, at least one running hardware module among the plurality of hardware modules, and to perform a particular function mapped to the identified at least one hardware module and the detected force touch.

According to an embodiment of the present disclosure, a method for providing a user interaction may include operations of detecting a force touch having a force greater than a predetermined value; identifying, when the force touch is detected, at least one running hardware module; and performing a particular function mapped to the identified at least one hardware module and the detected force touch.

According to various embodiments of the present disclosure, a particular function or operation to be performed in response to a force touch may be determined on the basis of a currently running hardware module. Additionally, such a function or operation to be performed may be set differently depending on levels of a force touch. Also, allowing a user to select a function or operation to be performed in response to a force touch may enhance user's convenience.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1 is a block diagram illustrating an electronic device according to an embodiment of the present disclosure.
FIG. 2 is a flow diagram illustrating a method for providing a user interaction based on a force touch according to an embodiment of the present disclosure.
FIG. 3 is a flow diagram illustrating a method for providing a user interaction based on a force touch according to another embodiment of the present disclosure.
FIG. 4 is a flow diagram illustrating a method for providing a user interaction based on a force touch according to still another embodiment of the present disclosure.
FIG. 5 is a flow diagram illustrating a method for providing a user interaction based on a force touch according to yet another embodiment of the present disclosure.

### DETAILED DESCRIPTION

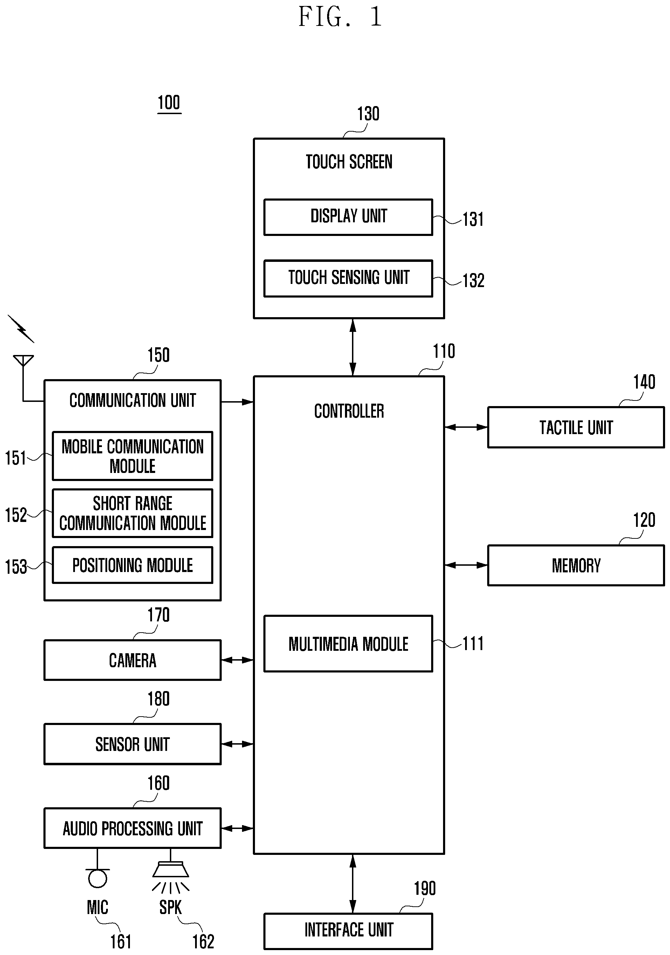

FIGURES 1 through 5, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged electronic device. The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

As used herein, the singular forms "a", "an", and "the" are intended to include the plural forms, including "at least one", unless the content clearly indicates otherwise. "Or" means "and/or". As used herein, the term "and/or" includes any and all combinations of one or more of the associated listed items. It will be further understood that the terms "comprises" and/or "comprising", or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

It will be understood that, although the terms "first", "second", "third", etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, "a first element", "component", "region", "layer" or "section" discussed below could be termed a second element, component, region, layer or section without departing from the teachings herein.

In this disclosure, an electronic device may be a device that involves a communication function. For example, an electronic device may be a smart phone, a tablet PC (Personal Computer), a mobile phone, a video phone, an e-book reader, a desktop PC, a laptop PC, a netbook computer, a PDA (Personal Digital Assistant), a PMP (Portable Multimedia Player), an MP3 player, a portable medical device, a digital camera, or a wearable device (e.g., an HMD (Head-Mounted Device) such as electronic glasses, electronic clothes, an electronic bracelet, an electronic necklace, an electronic appcessory, or a smart watch).

According to some embodiments, an electronic device may be a smart home appliance that involves a communication function. For example, an electronic device may be a TV, a DVD (Digital Video Disk) player, audio equipment, a refrigerator, an air conditioner, a vacuum cleaner, an oven, a microwave, a washing machine, an air cleaner, a set-top box, a TV box (e.g., Samsung HomeSync^{®}, Apple TV^{®}, Google TV^{®}, etc.), a game console, an electronic dictionary, an electronic key, a camcorder, or an electronic picture frame.

According to some embodiments, an electronic device may be a medical device (e.g., MRA (Magnetic Resonance Angiography), MRI (Magnetic Resonance Imaging), CT (Computed Tomography), ultrasonography, etc.), a navigation device, a GPS (Global Positioning System) receiver, an EDR (Event Data Recorder), an FDR (Flight Data Recorder), a car infotainment device, electronic equipment for ship (e.g., a marine navigation system, a gyrocompass, etc.), avionics, security equipment, or an industrial or home robot.

According to some embodiments, an electronic device may be furniture or part of a building or construction having a communication function, an electronic board, an electronic signature receiving device, a projector, or various measuring instruments (e.g., a water meter, an electric meter, a gas meter, a wave meter, etc.). An electronic device disclosed herein may be one of the above-mentioned devices or any combination thereof. As well understood by those skilled in the art, the above-mentioned electronic devices are exemplary only and not to be considered as a limitation of this disclosure.

FIG. 1 is a block diagram illustrating an electronic device according to an embodiment of the present disclosure.

Referring to FIG. 1, the electronic device 100 may include a controller 110, a memory 120, a touch screen 130, a tactile unit 140, a communication unit 150, an audio processing unit 160, a camera 170, a sensor unit 180, and an interface unit 190.

The controller 110 may control the whole operation of the electronic device 100, control a signal flow between internal blocks of the electronic device 100, and perform a data processing function. For example, the controller 110 may be a processor, for example, a central processing unit (CPU), an application processor (AP), a communication processor (CP), and the like. The controller 110 may be formed of a single core processor or a multi-core processor. Alternatively, the controller 100 may be formed of a plurality of processors.

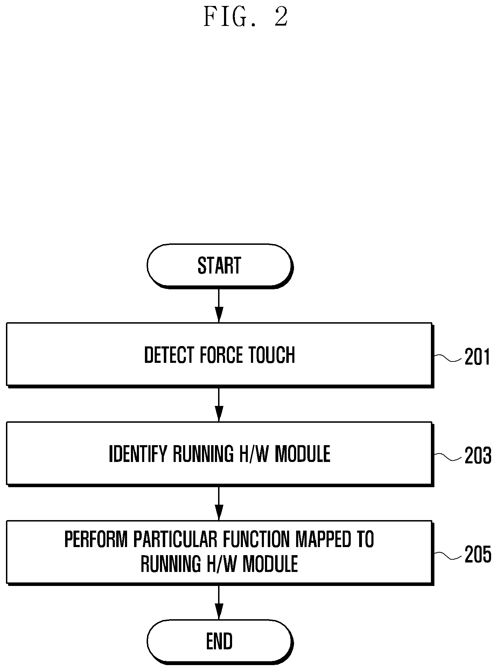

The controller 110 according to an embodiment of this disclosure may control various user interactions based on a force touch, i.e., a touch with a force more than a predetermined value. For example, when such a force touch is detected, the controller 110 may identify a running hardware module and then perform a particular function selected depending on the running hardware module. Additionally, in response to the detection of a force touch, the controller 110 may perform different functions depending on both the type of a running hardware module and the level of a force touch. Similarly, the controller 110 may perform different functions depending on both the type of a running hardware module and the type of a running application. Similarly, the controller 110 may perform different functions depending on all of the type of a running hardware module, the type of a running application, and the level of a force touch. If two or more hardware modules are running when a force touch is detected, the controller 110 may perform a particular function selected depending on a hardware module having a higher priority. A detailed description will be given below with reference to FIGS. 2 to 6.

The controller 110 may include a multimedia module 111 for playback of video and audio. The multimedia module 111 may include an audio/video codec, which may be formed of a video codec and an audio codec.

According to a certain embodiment, the multimedia module 111 may be formed separately without being included in the controller 110. According to another embodiment, the multimedia module 111 may be incorporated with the audio processing unit 160 for outputting an audio signal.

The memory 120 may store an operating system (OS) of the electronic device 100 and various applications or programs desired or required for increased, essential, or optional functions, for example, an audio output function, an image viewer function, a video playback function, a broadcast receiving function, an internet access function, a text message function, a game function, a navigation function, and the like. The memory 120 may also store various kinds of data, for example, music data, video data, game data, movie data, map data, etc.

The memory 120 according to an embodiment of this disclosure may store various kinds of information and programs desired or required for controlling user interactions based on a force touch. Additionally, the memory 120 may store the first mapping table that defines a particular function to be performed depending on a hardware module when a user interaction is received. Table 1 shows an example of the first mapping table.

**[Table 1]**

| User Interaction | Hardware Module | Function |
|---|---|---|
| Upward move after force touch | Camera | Zoom in |
| | Positioning module | Zoom in |
| | Video codec | Brightness increase |
| | Audio codec | Volume up |
| Downward move after force touch | Camera | Zoom out |
| | Positioning module | Zoom out |
| | Video codec | Brightness decrease |
| | Audio codec | Volume down |
| Release after force touch | Camera | Shooting |
| | Positioning module | Current location display |
| | Video codec | Recording start/stop |
| | Audio codec | Play/stop |

Referring to Table 1, in an embodiment of this disclosure, a particular function to be performed in response to a user interaction may be determined on the basis of a running hardware module without regard to an application being currently executed.

Table 1 is exemplary only and not to be construed as a limitation of this disclosure. Alternatively, for example, the user interaction may include a leftward or rightward move after a force touch. The above-listed functions may be varied by a user or a manufacturer.

Additionally, the memory 120 may store the second mapping table that defines a particular function to be performed depending on both a hardware module and a force level when a user interaction is received. Table 2 shows an example of the second mapping table.

**[Table 2]**

| User Interaction | Force Level | Hardware Module | Function |
|---|---|---|---|
| Upward move after force touch | 1 | Camera | Zoom in |
| | | Positioning module | Zoom in |
| | | Video codec | Brightness increase |
| | | Audio codec | Volume up |
| | 2 | Camera | Resolution increase |
| | | Positioning module | Route re-search |
| | | Video codec | Volume up |
| | | Audio codec | Playback speed up |
| Downward move after force touch | 1 | Camera | Zoom out |
| | | Positioning module | Zoom out |
| | | Video codec | Brightness decrease |
| | | Audio codec | Volume down |
| | 2 | Camera | Resolution decrease |
| | | Positioning module | Route cancel |
| | | Video codec | Volume down |
| | | Audio codec | Playback speed down |
| Release after force touch | 1 | Camera | Shooting |
| | | Positioning module | Current location display |
| | | Video codec | Recording start/stop |
| | | Audio codec | Play/stop |
| | 2 | Camera | Sequential shooting |
| | | Positioning module | Stopover setting |
| | | Video codec | Playback stop |
| | | Audio codec | Playback stop |

Referring to Table 2, in an embodiment of this disclosure, a particular function to be performed in response to a user interaction may be determined on the basis of both a running hardware module and a force touch level without regard to an application being currently executed.

Table 2 is exemplary only and not to be construed as a limitation of this disclosure. Alternatively, for example, the user interaction may include a leftward or rightward move after a force touch. The force level may have three or more levels. The above-listed functions may be varied by a user or a manufacturer.

Additionally, the memory 120 may store the third mapping table that defines a mapping relation between a hardware module and a priority. Table 3 shows an example of the third mapping table.

**[Table 3]**

| Hardware Module | Priority |
|---|---|
| Camera | 1 |
| Positioning module | 2 |
| Video codec | 3 |
| Audio codec | 4 |

Referring to Table 3, in an embodiment of this disclosure when two or more hardware modules are running, a particular function to be performed in response to a user interaction may be determined on the basis of priorities of the hardware modules. For example, if a camera, a positioning module, and a video codec are running simultaneously, a particular function to be performed may be determined on the basis of the camera having the highest priority.

Table 3 is exemplary only and not to be construed as a limitation of this disclosure. The above-listed functions and/or their priorities may be varied by a user or a manufacturer.

Additionally, the memory 120 may store the fourth mapping table that defines a particular function to be performed depending on a combination of hardware modules when a user interaction is received. Table 4 shows an example of the fourth mapping table.

**[Table 4]**

| User Interaction | Hardware Module | | Function |
|---|---|---|---|
| Upward move after force touch | Camera | Positioning module | Zoom in |
| | | Video codec | Brightness increase |
| | | Audio codec | Microphone sensitivity increase |
| Downward move after force touch | Camera | Positioning module | Zoom out |
| | | Video codec | Brightness decrease |
| | | Audio codec | Microphone sensitivity decrease |
| Release after force touch | Camera | Positioning module | Shooting |
| | | Video codec | Recording start/stop |
| | | Audio codec | Recording start/stop |

Referring to Table 4, in an embodiment of this disclosure when two or more hardware modules are running, a particular function to be performed in response to a user interaction may be determined on the basis of a combination of the hardware modules. For example, if a camera and a positioning module are running at a same time, a zoom-in function may be performed in response to a user interaction corresponding to an upward move after a force touch.

Table 4 is exemplary only and not to be construed as a limitation of this disclosure. Alternatively, for example, the user interaction may include a leftward or rightward move after a force touch. The above-listed combinations ofhardware modules and functions mapped thereto may be varied by a user or a manufacturer.

The touch screen 130 may perform an input function and a display function. For these functions, the touch screen 130 may include a display unit 131 and a touch sensing unit 132.

The display unit 131 displays various menus of the electronic device 100 and information entered by a user or to be offered to a user. The display unit 131 may be formed of a liquid crystal display (LCD), an organic light emitted diode (OLED), an active matrix OLED (AMOLED), a flexible display, a transparent display, etc.

The display unit 131 may offer various kinds of screens associated with the use of the electronic device 100, for example, a home screen, a menu screen, a lock screen, a game screen, a webpage screen, a call screen, a music or video play screen, etc. The display unit 131 according to an embodiment of this disclosure may display many screens associated with various functions performed in response to user interactions based on a force touch.

The touch sensing unit 132 is a device for offering an input function. When a touch input tool, e.g., a user's finger, a stylus, etc. touches or approaches the touch sensing unit 132, the touch sensing unit 132 may create a touch event and then deliver the created touch event to the controller 110. Specifically, the touch sensing unit 132 may recognize the occurrence of a touch event through a variation of physical quantity (e.g., capacitance, resistance, etc.) caused by a touch or proximity of a touch input tool. Additionally, the touch sensing unit 132 may include a touch panel for recognizing an electronic pen based on electromagnetic induction technique. In particular, the touch sensing unit 132 according to an embodiment of this disclosure may detect a force touch. Since the touch sensing unit 132 is known to those skilled in the art, the detailed description thereof will be omitted.

The tactile unit 140 may offer a tactile sensation (e.g., vibration) to a user. For example, the tactile unit 140 may create a vibration based on a predefined rule so as to notify the reception of a text message, a call request, an event message, or the like. The tactile unit 140 according to an embodiment of this disclosure may offer a tactile sensation in response to a user interaction based on a force touch. For example, when a force touch is detected, the tactile unit 140 may create and offer a vibration.

The communication unit 150 may support a wired and/or wireless communication function of the electronic device 100. For example, the communication unit 150 may include a mobile communication module 151 for supporting a mobile communication (e.g., based on 2G, 3G, 4G and/or 5G standards) function, a short range communication module 152 for supporting a short range communication function, and a positioning module 153 (e.g., a GPS module) for receiving information about a location of the electronic device 100. The short range communication module 152 may include a wireless LAN module, a Wi-Fi module, a Bluetooth module, an infrared communication module, Zigbee module, and/or the like. Additionally, the communication unit 150 may include a high definition multimedia interface (HDMI) communication module, a universal serial bus (USB) communication module, and/or the like for supporting a wired communication function.

The audio processing unit 160 may be connected with a speaker (SPK) 162 for outputting an audio signal transmitted/received during a call (i.e., outgoing or incoming sound), an audio signal contained in a received message, an audio signal associated with playback of an audio file stored in the memory 120, or the like, and with a microphone (MIC) 161 for collecting user's voice and any other audio signal. For example, the audio processing unit 160 may output, through the speaker 162, an audio signal associated with the playback of an audio file or video file, the execution of a game, and the like. For this, the audio processing unit 160 may include an audio codec for reproducing an audio signal.

The camera 170 is a device for taking a picture of a subject and then converting the taken picture into an electric signal so as to store such pictures as digital data. The camera 170 may have a charge coupled device (CCD) image sensor or a complementary metal oxide semiconductor (CMOS) image sensor. The camera 170 may support a picture shooting function and a video recording function.

The sensor unit 180 may check the state of the electronic device 100. The sensor unit 180 may include one or more sensors. For example, the sensor unit 180 may include a tilt sensor, a motion sensor, an acceleration sensor, a gravity sensor, an illumination sensor, an infrared sensor, a geomagnetic sensor, a gyro sensor, and the like.

The interface unit 190 may be connected with an external device, which may be an earphone, an auxiliary speaker, a docking station, a monitor, a television, etc. The interface unit 190 may include an ear jack interface, a USB interface, an HDMI interface, and the like. In case any external device is connected with the electronic device 200, the controller 110 may perform a particular function selected depending on the connected external device when a user interaction based on a force touch is detected. For example, if the auxiliary speaker is connected, the controller 110 may perform a volume regulation function in response to a user interaction based on a force touch. Also, if the monitor or TV is connected, the controller 110 may activate or deactivate a mirroring function for sending a current screen of the electronic device 100 to the monitor or TV.

Meanwhile, although not shown in FIG. 1, the electronic device 100 according to embodiments of the present disclosure may further include other elements inherently or optionally desired or required for the electronic device 100.

FIG. 2 is a flow diagram illustrating a method for providing a user interaction based on a force touch according to an embodiment of the present disclosure.

Referring to FIG. 2, the controller 110 of the electronic device 100 according to an embodiment of this disclosure may detect a force touch at operation 201. Such a force touch may be detected when a user presses the touch screen 130 with a force greater than a predetermined critical value. The force touch may include an upward move after a force touch, a downward move after a force touch, a leftward move after a force touch, a rightward move after a force touch, a force release after a force touch, and the like. At this operation, the electronic device 100 may be in a state of executing a specific application (e.g., a camera application, a navigation application, a music play application, etc.), in a locked state, or in an idle state.

When the force touch is detected, the controller 110 may identify a running hardware module at operation 203.

Then, at operation 205, the controller 110 may perform a particular function mapped to the running hardware module. Specifically, the controller 110 may identify, based on the running hardware module, a specific function to be performed in response to the detected force touch (e.g., an upward move, a downward move, a leftward move, a rightward move, a force release, etc.), and then perform the identified function. For example, as shown in Table 1, if an upward move after a force touch is detected while the camera 170 is running, the controller 110 may perform a zoom-in function. Also, if a downward move after a force touch is detected, the controller 110 may perform a zoom-out function. And also, if a release of a force touch is detected, the controller 110 may perform a shooting function (i.e., picture-taking function).

In another example, if an upward move after a force touch is detected while the positioning module 153 is running, the controller 110 may perform a zoom-in function. If a downward move after a force touch is detected, the controller 110 may perform a zoom-out function. If a force touch is released, the controller 110 may perform a current location display function.

According to a certain embodiment, when the positioning module 153 is running, the controller 110 may control a navigation function. Specifically, if an upward move after a force touch is detected while the positioning module 153 is running, the controller 110 may perform a route re-search function. If a downward move after a force touch is detected, the controller 110 may perform a route cancel function. In case of releasing a force touch without any move after the force touch, the controller 110 may perform a current location display function.

Additionally, if an upward move after a force touch is detected while the video codec is running, the controller 110 may perform a brightness increase function. If a downward move after a force touch is detected, the controller 110 may perform a brightness decrease function. In case of a release of a force touch, the controller 100 may a recording start/stop function.

Additionally, if an upward move after a force touch is detected while the audio codec is running, the controller 110 may perform a volume-up function. If a downward move after a force touch is detected, the controller 110 may perform a volume-down function. In case of a release of a force touch, the controller 100 may a play/stop function.

As discussed above, according to an embodiment of this disclosure, even though a same application is running, a particular function to be performed depending on a running hardware module when a force touch is detected may be determined differently (or sometimes unvaried pursuant to a mapping rule). For example, when a camera application is executed and then a picture shooting function, using or requiring the operation of the camera 170 is performed, the electronic device 100 may perform a zoom function, a brightness regulation function, and a shooting function selectively in response to a force touch. For example, the controller 110 of the electronic device 100 may perform a zoom-in function in response to an upward moving force touch and perform a zoom-out function in response to a downward moving force touch. In another embodiment, the controller 110 of the electronic device 100 may perform a brightness increase function in response to a rightward moving force touch and perform a brightness decrease function in response to a leftward moving force touch. And also, the controller 110 of the electronic device 100 may perform a shooting function in response to a force touch release.

Meanwhile, when a camera application is executed and then a recording function, using or requiring the operation of both the camera 170 and the video codec, is performed, the electronic device 100 may perform a frame rate regulation function, a brightness regulation function, and a recording start/stop function selectively in response to a force touch. Specifically, the controller 110 of the electronic device 100 may perform a frame rate increase function in response to an upward moving force touch and perform a frame rate decrease function in response to a downward moving force touch. Also, the controller 110 of the electronic device 100 may perform a brightness increase function in response to a rightward moving force touch and perform a brightness decrease function in response to a leftward moving force touch. And also, the controller 110 of the electronic device 100 may perform a shooting function in response to a force touch release.

Additionally, according to an embodiment of this disclosure, without regard to running applications, a particular function to be performed depending on a running hardware module when a force touch is detected may be determined differently (or sometimes unvaried pursuant to a mapping rule). For example, when a built-in music player application or a downloaded music player application is executed and thereby the audio codec is running, the electronic device 100 may increase the volume in response to an upward moving force touch and decrease the volume in response to a downward moving force touch.

Additionally, when a built-in video player application or a downloaded video player application is executed and thereby the video codec is running, the electronic device 100 may increase the brightness of screen in response to an upward moving force touch and decrease the brightness of screen in response to a downward moving force touch. Further, the electronic device 100 may perform a fast-forward function in response to a rightward moving force touch and perform a rewind function.

Additionally, when a navigation application, a map application, a subway line application, etc., using or requiring the operation of the positioning module 153, is executed, the electronic device 100 may offer a zoom function in response to a force touch. Specifically, the controller 110 of the electronic device 100 may increase a zoom-in level in response to an increase of force, and decrease a zoom-in level in response to a decrease of force. Also, the controller 110 may perform a zoom-in function in response to an upward moving force touch, and perform a zoom-out function in response to a downward moving force touch.

According to various embodiments of this disclosure, a particular function to be performed is determined depending on the type of a running hardware module. Therefore, the electronic device 100 has the ability to control, based on a force touch interaction, any third-party application that fails to have a definition of force touch interactions.

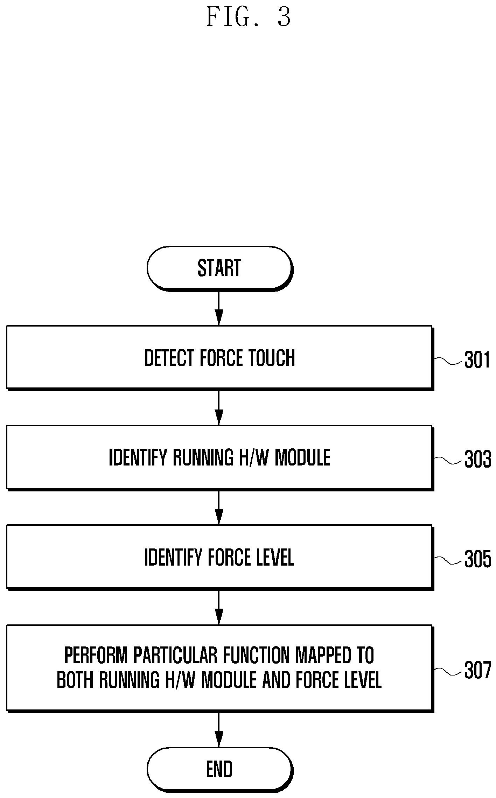

FIG. 3 is a flow diagram illustrating a method for providing a user interaction based on a force touch according to another embodiment of the present disclosure.

Referring to FIG. 3, the controller 110 of the electronic device 100 may detect a force touch at operation 301. This force touch may include an upward move after a force touch, a downward move after a force touch, a leftward move after a force touch, a rightward move after a force touch, a force release after a force touch, and the like.

When the force touch is detected, the controller 110 may identify a running hardware module at operation 303. At operation 305, the controller 110 may further identify a force level. Meanwhile, these operations 303 and 305 may be performed simultaneously, or the operation 303 may be performed after the operation 305.

Then, at operation 307, the controller 110 may perform a particular function mapped to both the running hardware module and the force level. Specifically, the controller 110 may identify, based on the running hardware module and the force level, a specific function to be performed in response to the detected force touch (e.g., an upward move, a downward move, a leftward move, a rightward move, a force release, etc.), and then perform the identified function. For example, as shown in Table 2, if an upward move after a force touch having the first size (i.e., the first level) is detected while the camera 170 is running, the controller 110 may perform a zoom-in function. If a downward move after a force touch having the first size is detected, the controller 110 may perform a zoom-out function. Also, the controller 110 may increase a resolution in case of an upward move after a force touch having the second size (i.e., the second level), and decrease a resolution in case of a downward move after a force touch having the second size. And also, the controller 110 may perform a shooting function in case of a release of a force touch having the first size, and perform a sequential shooting function in case of a release of a force touch having the second size.

In another example, if an upward move after a force touch having the first size is detected while the positioning module 153 is running, the controller 110 may perform a zoom-in function. If a downward move after a force touch having the first size is detected, the controller 110 may perform a zoom-out function. Also, the controller 110 may perform a route re-search function in case of an upward move after a force touch having the second size, and perform a route cancel function in case of a downward move after a force touch having the second size. And also, the controller 110 may perform a current location display function in case of a release of a force touch having the first size, and perform a stopover setting function in case of a release of a force touch having the second size.

Additionally, if an upward move after a force touch having the first size is detected while the video codec is running, the controller 110 may perform a brightness increase function. If a downward move after a force touch having the first size is detected, the controller 110 may perform a brightness decrease function. Also, the controller 110 may perform a volume increase function in case of an upward move after a force touch having the second size, and perform a volume decrease function in case of a downward move after a force touch having the second size. And also, the controller 110 may perform a recording start/stop function in case of a release of a force touch having the first size, and perform a playback stop function in case of a release of a force touch having the second size.

Additionally, if an upward move after a force touch having the first size is detected while the audio codec is running, the controller 110 may perform a volume increase function. If a downward move after a force touch having the first size is detected, the controller 110 may perform a volume decrease function. Also, the controller 110 may perform a playback speed-up function in case of an upward move after a force touch having the second size, and perform a playback speed-down function in case of a downward move after a force touch having the second size. And also, the controller 110 may perform a play/stop function in case of a release of a force touch having the first size, and perform a playback stop function in case of a release of a force touch having the second size.

As discussed above, a particular function to be performed when a force touch is detected may be determined depending on both a running hardware module and a force touch level

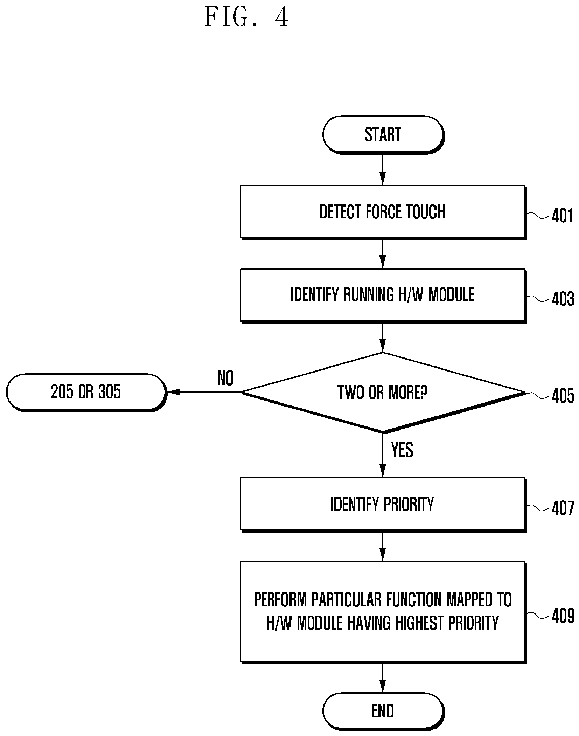

FIG. 4 is a flow diagram illustrating a method for providing a user interaction based on a force touch according to still another embodiment of the present disclosure.

Referring to FIG. 4, the controller 110 of the electronic device 100 may detect a force touch at operation 401. This force touch may include an upward move after a force touch, a downward move after a force touch, a leftward move after a force touch, a rightward move after a force touch, a force release after a force touch, and the like.

When the force touch is detected, the controller 110 may identify a running hardware module at operation 403. At operation 405, the controller 110 may determine whether two or more hardware modules are running.

If a single hardware module is running, the controller 110 may perform the above-discussed operation 205 or 305 as shown in FIG. 2 or 3.

If two or more hardware modules are running, the controller 110 may identify, at operation 407, respective priorities of the running hardware modules.

Then, at operation 409, the controller 110 may perform a particular function mapped to the hardware module having the highest priority. For example, if it is identified at operation 403 that the camera 170, the positioning module 153, and the audio codec are running, the controller 110 may identify, by referring to Table 3, that the camera 170 has the highest priority, and then perform, by referring to Table 1, a particular function mapped to the camera 170.

Although not shown in FIG. 4, an alternative embodiment may further include an operation of identifying a force level. In this case, the above-discussed operation 409 may be considered as performing a function mapped to both a hardware module having the highest priority and the identified force level.

As discussed above, if two or more hardware modules are running when a force touch is detected, a particular function to be performed may be determined depending on a hardware module having the highest priority.

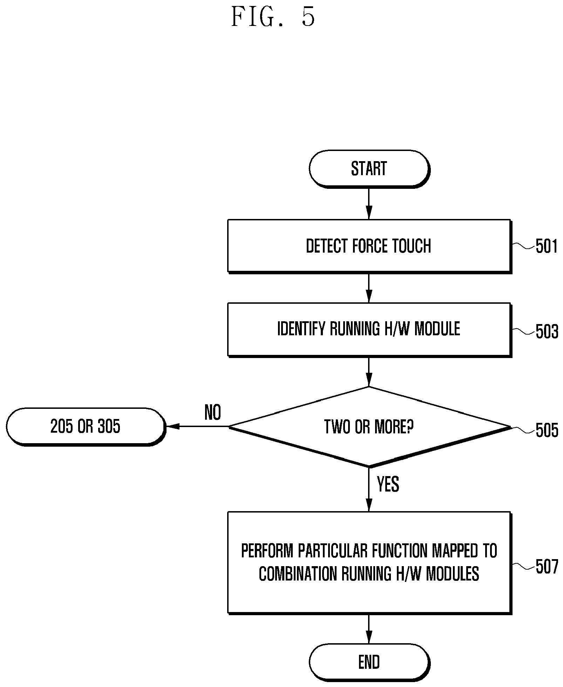

FIG. 5 is a flow diagram illustrating a method for providing a user interaction based on a force touch according to yet another embodiment of the present disclosure.

Referring to FIG. 5, the controller 110 of the electronic device 100 may detect a force touch at operation 501. This force touch may include an upward move after a force touch, a downward move after a force touch, a leftward move after a force touch, a rightward move after a force touch, a force release after a force touch, and the like.

When the force touch is detected, the controller 110 may identify a running hardware module at operation 503. At operation 505, the controller 110 may determine whether two or more hardware modules are running.

If a single hardware module is running, the controller 110 may perform the above-discussed operation 205 or 305 as shown in FIG. 2 or 3.

If two or more hardware modules are running, the controller 110 may perform, at operation 507, a particular function mapped to a combination of the running hardware modules. Specifically, the controller 110 may identify, based on a combination of the running hardware modules, a specific function to be performed in response to the detected force touch (e.g., an upward move, a downward move, a leftward move, a rightward move, a force release, etc.), and then perform the identified function. For example, as shown in Table 4, if an upward move after a force touch is detected while the camera 170 and the positioning module 153 are running, the controller 110 may perform a zoom-in function. If a downward move after a force touch is detected, the controller 110 may perform a zoom-out function. If a release of a force touch is detected, the controller 110 may perform a shooting function.

Additionally, if an upward move after a force touch is detected while the camera 170 and the video codec are running, the controller 110 may perform a brightness increase function. If a downward move after a force touch is detected, the controller 110 may perform a brightness decrease function. If a release of a force touch is detected, the controller 110 may perform a video recording start/stop function.

Additionally, if an upward move after a force touch is detected while the camera 170 and the audio codec are running, the controller 110 may perform a microphone sensitivity increase function. If a downward move after a force touch is detected, the controller 110 may perform a microphone sensitivity decrease function. If a release of a force touch is detected, the controller 110 may perform an audio recording start/stop function.

Although not shown in FIG. 5, an alternative embodiment of the disclosure may further include an operation of identifying a force level. In this case, the above-discussed operation 507 may be considered as performing a function mapped to both a combination of hardware modules and the identified force level.

As discussed above, a particular function to be performed in response to a force touch may be determined depending on a combination of running hardware modules.

The above-discussed method is described herein with reference to flowchart illustrations of user interfaces, methods, and computer program products according to embodiments of the present disclosure. It will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which are executed via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that are executed on the computer or other programmable apparatus provide steps for implementing the functions specified in the flowchart block or blocks.

And each block of the flowchart illustrations may represent a module, segment, or portion of code, which comprises one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

Although the present disclosure has been described with various exemplary embodiments, various changes and modifications may be suggested to one skilled in the art. It is intended that the present disclosure encompass such changes and modifications as fall within the scope of the appended claims.

## Claims

1. An electronic device comprising:
a plurality of hardware modules;
a touch screen configured to detect a force touch that includes a force greater than a predetermined value; and
a controller configured to identify, when the force touch is detected, at least o ne running hardware module among the plurality of hardware modules, and to perfo rm a particular function mapped to the identified at least one hardware module and t he detected force touch.

2. The electronic device of claim 1, wherein the controller is further configured to identify a force level of the force touch and to determine, depending on the identi fied force level, a particular function to be performed.

3. The electronic device of claim 1, wherein when two or more of the plurality of hardware modules are running, the controller is further configured to identify pri orities of the running hardware modules and to perform the particular function map ped to a specific hardware module having the highest priority.

4. The electronic device of claim 1, wherein when two or more of the plurality of hardware modules are running, the controller is further configured to perform the particular function mapped to a combination of the running hardware modules.

5. The electronic device of claim 4, wherein the particular function, based on th e combination of the running hardware modules, comprises identifying a specific fu nction to be performed in response to the detected force touch, and subsequently per forming the identified function.

6. The electronic device of claim 5, wherein the specific function to be perform ed in response to the detected force touch includes at least one of an upward move, a downward move, a leftward move, a rightward move, or a force release.

7. The electronic device of claim 1, further comprising:
a memory configured to store a mapping table that defines a mapping relatio n between the particular function and at least one of a hardware module, a combinat ion of hardware modules, a force level, and an application.

8. The electronic device of claim 7, wherein the memory is further configured t o store information about priorities of the plurality of hardware modules.

9. A method for providing a user interaction, the method comprising:
detecting a force touch having a force greater than a predetermined value;
identifying, when the force touch is detected, at least one running hardware module; and
performing a particular function mapped to the identified at least one running hardware module and the detected force touch.

10. The method of claim 9, further comprising:
identifying a force level of the force touch; and
determining , depending on the identified force level, a specific function to b e performed.

11. The method of claim 9, further comprising
wherein the specific function to be performed in response to the detected forc e touch includes at least one of an upward move, a downward move, a leftward mov e, a rightward move, or a force release.

12. The method of claim 9, wherein if two or more hardware modules are runnin g, performing the particular function includes identifying priorities of the running h ardware modules and performing the particular function mapped to a specific hardw are module having the highest priority.

13. The method of claim 9, wherein if two or more hardware modules are runnin g, performing the particular function includes performing the particular function ma pped to a combination of the running hardware modules.

14. The method of claim 9, wherein if two or more hardware modules are runnin g, performing the particular function includes identifying priorities of the running h ardware modules from a mapping table that stores information about priorities of th e hardware modules, and performing the particular function mapped to a specific ha rdware module having the highest priority.
